# EUROPÄISCHE PATENTSCHRIFT

(11) **EP 0 740 886 B1**
(45) Veröffentlichungstag und Bekanntmachung des Hinweises auf die Patenterteilung: **12.07.2000**
(21) Anmeldenummer: 95936699.8
(22) Anmeldetag: 23.11.1995
(51) Int. Cl.: H04N 11/16

(54) **DECODIERUNG EINES PALPLUS-BILDSIGNALS**
DECODING OF A PALPLUS VIDEO SIGNAL
DECODAGE D'UN SIGNAL VIDEO PALPLUS

(30) Priorität: 23.11.1994 DE 4441565; 03.03.1995 DE 19507388; 29.09.1995 DE 19536327
(43) Veröffentlichungstag der Anmeldung: 06.11.1996
(73) Patentinhaber: Koninklijke Philips Electronics N.V., 5621 BA Eindhoven (NL); Philips Corporate Intellectual Property GmbH, 52064 Aachen (DE)
(72) Erfinder: DAMMANN, Martin, D-25365 Sparrieshoop (DE); STÄCKER, Günter, D-24568 Kaltenkirchen (DE); DREIER, Hans-Joachim, D-24568 Kaltenkirchen (DE); ROZENDAAL, Leendert, Teunis, NL-5553 BP Valkenswaard (NL)
(74) Vertreter: von Laue, Hanns-Ulrich, Dipl.-Ing.
(86) Internationale Anmeldenummer: IB9501048
(87) Internationale Veröffentlichungsnummer: WO9616514

(56) Entgegenhaltungen:
- DE-A- 4 243 804
- IEEE TRANSACTIONS ON CONSUMER ELECTRONICS, Bd. 40, Nr. 3, 1.August 1994 Seiten 718-726, XP 000471241 D'AMBROSIO E ET AL 'A 2.9 MEGABIT FIELD MEMORY ESPECIALLY SUITABLE FOR PALPLUS APPLICATIONS'
- IEE COLLOQUIM ON 'PALPLUS' (DIGEST NO: 1994/090), - 12.April 1994 LONDON (UK), Seiten 5/1-5/4, H J DREIER 'Chipset for Palplus Receivers'

## Beschreibung

Die Erfindung betrifft die Decodierung eines PALplus-Bildsignals, d.h. also zur Darstellung eines solchen Bildsignals auf einem Bildwiedergabegerät mit einem Bildseitenverhältnis von 16:9.

Für Bildwiedergabegeräte, insbesondere Fernsehgeräte, hat sich in den letzten Jahrzehnten ein Bildseitenverhältnis von 4:3 durchgesetzt. Zur besseren Anpassung an einerseits die Eigenschaften des menschlichen Auges und andererseits das Bildseitenverhältnis von Kinofilmen werden seit einiger Zeit auch Bildwiedergabegeräte mit einem Bildseitenverhältnis des dargestellten Bildes von 16:9 angeboten. Für das Programmmaterial besteht jedoch ein Kompatibilitätsproblem, da Bildmaterial im Seitenverhältnis 16:9 auf Bildschirmen mit einem Bildseitenverhältnis von 4:3 nur in verzerrter Form möglich ist. Einerseits um dieses Problem zu beseitigen, andererseits auch zur Verbesserung der Bildqualität, wurde das sogenannte PALplus-System entwickelt. Ein PALplus-Bildsignal wird auf Bildschirmen des Bildseitenverhältnisses 4:3 mit einem aktiven mittleren Teil, der den Bildinhalt enthält, und oberhalb und unterhalb dieses Bereiches vorgesehenen schwarzen Balken dargestellt. Damit kann der mittlere aktive Teil, der etwa ein Bildseitenverhältnis von 16:9 hat, durch Anwendung der schwarzen Balken auf einem 4:3-Empfänger unverzerrt dargestellt werden.

Zur Darstellung eines solchen PALplus-Bildsignals mit einem Bildseitenverhältnis von 16:9 enthalten die schwarzen Balken sogenannte Helper-Signale, bei denen es sich um ein Vertikal-Hochpaßsignal des Luminanzanteils des Bildsignals handelt und die es einem entsprechenden PALplus-Decoder gestatten, ein Bild mit einem Bildseitenverhältnis von 16:9 mit der vollen Vertikalauflösung der Luminanz zu generieren. Dabei werden zusätzlich zu den aktiven Bildzeilen des mittleren Bildbereichs neue Bildzeilen anhand der Helper-Signale generiert, die zwischen die ursprünglichen aktiven Bildzeilen eingefügt werden. Die in dem Bildsignal enthaltenen Farbinformationen werden nur vertikal interpoliert. Zusätzlich ist nach dem PALplus-Standard noch vorgesehen, eine verbesserte Trennung des Chrominanzsignals vom Luminanzsignal vorzunehmen. Diese verbesserte Trennung des Chrominanzsignals vom Luminanzsignal wird als Motion Adaptive Colour Plus-Processing bezeichnet, kurz MACP. Das so decodierte Bild weist ein Bildseitenverhältnis von 16:9 auf und kann damit mit voller Vertikalauflösung und verbesserter Chrominanzsignal/Luminanzsignal-Trennung auf einem 16:9 Bildschirm dargestellt werden.

In der PALplus-Systemspezifikation sind die zur Generierung eines solchen Bildes beschriebenen Algorithmen und Verarbeitungsschritte beschrieben. Diese werden von bekannten Schaltungsanordnungen in sequentieller Weise abgearbeitet. Dazu werden Teilbildspeicher mit sequentiellem Zugriff eingesetzt, d.h. also Teilbildspeicher, die ausgangsseitig die Daten des Bildsignals in fester vorgegebener Reihenfolge liefern. Infolge des Einsatzes derartiger Speicher ist für die Decodierung der bewegungsadaptiven Trennung von Luminanz- und Chrominanzsignal ein Teilbildspeicher für die Zwischenspeicherung von Bilddaten erforderlich. Für die Chromadaten, die für die bewegungsadaptive Steuerung dieser Trennung benötigt werden, ist ein weiterer Speicher erforderlich, der die entsprechenden Chromadaten aufnehmen kann. Um die oben beschriebene Rekonstruktion des vollen vertikalen Bildinhalts anhand der Helper-Signale durchzuführen und somit auf dem Bild mit schwarzen Balken ein Bild mit voller vertikaler Auflösung zu gewinnen, sind zwei weitere Teilbildspeicher erforderlich, da, abhängig vom Übertragungsmodus, innerhalb eines Teilbildes oder innerhalb eines Vollbildes, also zweier Teilbilder, diese Information verrechnet werden muß.

Bei den bekannten Decodern wird ferner bei Geräten ohne Erhöhung der Vertikalfrequenz ein weiterer Teilbildspeicher verwendet, um einen zeitlichen vertikalen Versatz zwischen dem empfangenen Bildsignal und dem decodierten Bildsignal auszugleichen, der im auf dem Bildschirm dargestellten Bild zu Störungen im Ablenkraster führen könnte.

Aus der DE-A-42 43 804 ist ein Empfänger zur Verarbeitung von PALplus-Signalen bekannt, welcher mit einer Speicheranordnung zur Abspeicherung von Daten, die bei der Dekodierung eines PALplus-Signals benötigt werden, arbeitet. Bei der Signalverarbeitung dieses Empfängers ist keine Bewegungsdetektion vorgesehen, die bei der PALplus-Dekodierung eingesetzt wird. Die Dekodierung arbeitet also nicht bewegungsadaptiv. Ferner ist in dieser Anordnung keine Umschaltung zwischen den PALplus Modi Film-Mode und Kamera-Mode vorgesehen.

Es ist Aufgabe der Erfindung, einen PALplus-Dekoder und ein PALplus-Dekodierungsverfahren anzugeben, welche mit möglichst geringem Schaltungsaufwand auskommen, jedoch eine bewegungsadaptive PALplus-Dekodierung vornehmen und eine Anpassung der Dekodierung an den PALplus Film-Mode und PALplus Kamera-Mode gestatten.

Diese Aufgabe ist erfindungsgemäß dadurch gelöst, daß ein Schaltkreis zur Signalverarbeitung vorgesehen ist, der mit einer Speicheranordnung gekoppelt ist, welche die Daten zweier Teilbilder des Bildsignals oder des decodierten Bildsignals und zur Berechnung von Bewegungsinformationen bestimmte, bildpunktweise addierte Chromainformationen zweier Teilbilder eines Vollbildes aufnehmen kann, daß die Speicheranordnung wahlfreien Zugriff auf alle Daten wenigstens eines abgespeicherten Teilbildes gestattet,
daß der Schaltkreis zur Signalverarbeitung auch zur vollständigen PALplus-Decodierung, insbesondere zur bewegungsadaptiven Luminanz-Chrominanz-Trennung und zur Rekonstruktion des vollen vertikalen Bildinhalts, ausschließlich auf die in der Speicheranordnung abgespeicherten Daten zugreift und daß der Schaltkreis zur Signalverarbeitung mittels Steuersignalen in der Weise umschaltbar ist, daß er in Abhängigkeit der Steuersignale eine PALplus-Dekodierung in einem Film-Mode oder einem Kamera-Mode, in dem Daten von Studiokameras übertragen werden, vornimmt.

Erfindungsgemäß ist also nur ein Schaltkreis zur Signalverarbeitung vorgesehen, der mit einer Speicheranordnung gekoppelt ist, welche Daten zweier Teilbilder, also eines Vollbildes, aufnehmen kann. Ferner ist die Speicheranordnung so ausgelegt, daß sie zusätzlich zu den Daten dieser zwei Teilbilder Daten aufnehmen kann, die aus den Chromainformationen zweier aufeinanderfolgender Teilbilder berechnet wurden und die zur Ermittlung von Bewegung im Bildinhalt bestimmt sind. In dem PALplus-Standard ist es vorgesehen, aus den Daten zweier Teilbilder eines Vollbildes einerseits und den Daten zweier Teilbilder eines nachfolgenden Vollbildes andererseits durch Differenzbildung Bewegungsinformation zu gewinnen. Die Differenz der Chromainformationen zweier aufeinanderfolgender Teilbilder wird mit den Teilbilddaten in der Speicheranordnung abgespeichert. Dabei kann es sich bei den Bilddaten um die Daten des ursprünglichen, noch nicht decodierten Bildsignals, handeln, wie auch um die Daten des bereits decodierten Bildsignals. Dies ist abhängig davon, welche Daten für die Decodierung erforderlich sind.

Erfindungsgemäß ist diese Speicheranordnung so ausgelegt, daß sie wahlfreien Zugriff auf die in ihr abgespeicherten Daten des Bildsignals gestattet. Damit können die Daten nicht mehr nur nach vorgegebener Reihenfolge bzw. in der gleichen Reihenfolge wie sie eingelesen wurden ausgelesen werden, sondern sie können in beliebiger Reihenfolge ausgelesen werden, die unabhängig von der Einlese-Reihenfolge ist.

Diese Ausgestaltung der Speicheranordnung gestattet es, eine Speicheranordnung vorzusehen, die nur die Daten zweier Teilbilder sowie die Differenz der Chromainformationen zweier aufeinanderfolgender Teilbilder aufnehmen kann. Daher genügt es, daß der Schaltkreis zur Signalverarbeitung auch bei einer Decodierung nach dem PALplus-Standard, die alle Spezifikationsmerkmale der PALplus-Norm erfüllt, ausschließlich auf die Daten der Speicheranordnung zugreift.

Gegenüber den Anordnungen nach dem Stande der Technik ist damit eine zweifache Einsparung erreicht, nämlich einerseits in Form des einzigen Schaltkreises zur Signalverarbeitung bzw. zur Decodierung, der ausreicht, da nur noch auf eine Speicheranordnung zugegriffen werden muß. Gegenüber dem Stand der Technik ist ferner nur noch ein Bildspeicher erforderlich, der die Daten zweier Teilbildspeicher aufnehmen kann, im Gegensatz zu den nach dem Stande der Technik vorgesehenen vier bis fünf Teilbildspeichern.

Wie oben bereits erläutert wurde, kann die erfindungsgemäße Schaltungsanordnung insbesondere vorteilhaft dazu eingesetzt werden, bei minimalem Schaltungsaufwand eine PALplus-Decodierung nach vollständiger Spezifikation vorzunehmen. Es gibt dazu verschiedene Möglichkeiten, wie die empfangenen Teilbilder in der Schaltungsanordnung verarbeitet werden können. Der zeitliche Ablauf bzw. wann welches Teilbild PALplus-decodiert und gegebenenfalls zwischengespeichert wird, kann in vielfältiger Weise vorgenommen werden. Hierzu werden nachfolgend zwei mögliche Varianten erläutert.

Gemäß einer ersten Ausführungsform wird die Verarbeitung empfangener Teilbilder in der Weise vorgenommen, daß im Kamera-Mode oder im Film-Mode folgende Verarbeitung der Daten stattfindet:
- daß bei Empfang eines ungeradzahligen Teilbildes Tbₙ
- die Daten Mₙ und die Daten Hₙ sowie im Kamera-Mode die aus den Teilbildern Tbₙ₋₁ und Tbₙ₋₂, deren Daten aus der Speicheranordnung ausgelesen werden, berechneten Daten IFA_{n-2,n-1} in der Speicheranordnung abgespeichert werden und
- die Daten Mₙ₋₁, Hₙ₋₁ und Mₙ₋₂, Hₙ₋₂ der Teilbilder Tbₙ₋₁ und Tbₙ₋₂ und im Kamera-Mode die aus den Chroma-Daten der Teilbilder Tbₙ₋₃ und Tbₙ₋₄ berechneten Daten IFA_{n-4,n-3} aus der Speicheranordnung ausgelesen und daraus das PALplus Teilbild Eₙ₋₂ berechnet und ausgegeben wird und das PALplus Teilbild Eₙ₋₁ berechnet und
in der Speicheranordnung abgespeichert wird,
- und daß bei Empfang eines geradzahligen Teilbildes Tbₙ₊₁
- die Daten Mₙ₊₁ und Hₙ₊₁ in der Speicheranordnung abgespeichert werden und
- die Daten Eₙ₋₁ aus der Speicheranordnung ausgelesen und als PALplus Teilbild Eₙ₋₁ ausgegeben werden,
wobei Mₙ die Daten des aktiven Bildbereichs, Hₙ die Helper-Informationen, IFAₙ die bildpunktweise aufaddierten Chromadaten zweier Teilbilder eines Vollbildes bezeichnen und wobei Eₙ das PALplus-decodierte Teilbild Tbₙ bezeichnet.

Diese erste Ausführungsform eines Verfahrens zur Verarbeitung von Daten eines PALplus-Signals hat insbesondere den Vorteil, daß es zur Decodierung des PALplus-Bildsignals gemäß der vollständigen PALplus-Spezifikation sowohl im Kamera-Modus wie auch im Film-Modus geeignet ist.

Für die Verarbeitung der Teilbilder gilt, daß jeweils ungeradzahlige und geradzahlige Teilbilder in verschiedener Weise verarbeitet werden. Ein Vollbild setzt sich jeweils aus einem ungeradzahligen und einem nachfolgenden geradzahligen Teilbild zusammen.

In der folgenden Erläuterung werden die ungeradzahligen Teilbilder mit dem Index n und die geradzahligen Teilbilder mit dem Index n+1 gekennzeichnet. Die Daten des aktiven Bildbereichs des PALplus-Signals werden mit Mₙ gekennzeichnet. Diese Daten sind diejenigen der aktiven Bildzeilen des PALplus-Signals, so wie dieses in noch nicht dekodierter Form übertragen wird. Wie oben bereits erläutert wurde, werden in diesem noch nicht dekodierten PALplus-Signal ferner Helper-Informationen in einem oberen und unteren Bildbereich übertragen, die zur Rekonstruktion des vollständigen vertikalen Bildinhalts vorgesehen sind. Diese werden nachfolgend mit Hₙ gekennzeichnet. Zur Bestimmung von in dem Bildinhalt des PALplus-Signals vorliegender Bewegung sind mit IFAₙ bezeichnete Daten stellen die aufaddierten Chromadaten zweier Teilbilder eines Vollbildes dar. Dabei werden jeweils die Daten von Bildpunkten gleicher Position innerhalb des Bildes und innerhalb der Zeile zweier Teilbilder aufaddiert. Diese Daten sind zur späteren Bestimmung von Bewegungsinformationen vorgesehen. Mit Mₙ' bezeichnete Daten stellen die oben beschriebenen Daten des aktiven Bildbereichs dar, die bereits bezüglich der Trennung von Luminanz und Chrominanz bearbeitet sind. Es ist hier also bereits eine teilweise Bearbeitung der Daten gemäß der PALplus-Spezifikation vorgenommen worden. Eₙ bezeichnet das PALplus dekodierte Teilbild Tbₙ.

Diese Daten werden gemäß der oben angegebenen Vorgehensweise der ersten Ausführungsform des Verfahrens zur Verarbeitung von Daten eines PALplus-Bildsignals verarbeitet. Dadurch wiederholen sich die oben beschriebenen Vorgänge für jedes Vollbild, d.h. für jedes neue Vollbild werden die Daten seines ungeradzahligen Teilbildes Tbₙ und die nachfolgend empfangenen Daten seines geradzahligen Teilbildes Tbₙ₊₁ in oben angegebener Weise verarbeitet. Damit wird insbesondere der oben beschriebene Vorteil erzielt, daß relativ wenig Speicher für die Zwischenspeicherung von Daten erforderlich ist.

Für eine zweite Ausführungsform eines Verfahrens zur Verarbeitung von Daten eines PALplus-Bildsignals ist vorgesehen, daß im Kamera-Mode folgende Verarbeitung der Daten stattfindet:
- daß bei Empfang eines ungeradzahligen Teilbildes Tbₙ
   - die Daten Mₙ und Hₙ des Teilbildes Tbₙ in der Speicheranordnung abgespeichert werden,
   - aus den aus der Speicheranordnung ausgelesenen Daten Mₙ₋₂, Mₙ₋₁ und IFA_{n-4,n-3} und aus den aus den Daten Mₙ₋₂ und Mₙ₋₁ ermittelten Daten IFA_{n-2,n-1} die Daten Mₙ₋₁' berechnet und abgespeichert werden und die Daten IFA_{n-2,n-1} abgespeichert werden,
   - aus den aus der Speicheranordnung ausgelesenen Daten Mₙ₋₁, Mₙ₋₂ Hₙ₋₂ und IFA_{n-4,n-3} und aus den Daten IFA_{n-2,n-1} das PALplus Teilbild Eₙ₋₂ berechnet und ausgegeben wird,
- und daß bei Empfang eines geradzahligen Teilbildes Tbₙ₊₁
   - die Daten Mₙ₊₁ und Hₙ₊₁ in der Speicheranordnung abgespeichert werden,
   - die Daten Hₙ₋₁ und Mₙ₋₁' aus der Speicheranordnung ausgelesen aus diesen das PALplus Teilbild Eₙ₋₁ berechnet und ausgegeben wird,
   wobei Mₙ die Daten des aktiven Bildbereichs, Hₙ die Helper-Informationen, IFAₙ die bildpunktweise aufaddierten Daten zweier Teilbilder eines Vollbildes und Mₙ' die bezüglich der Trennung von Luminanz und Chrominanz bearbeiteten Daten eines Teilbildes Tbₙ bezeichnen und wobei Eₙ das PALplus-decodierte Teilbild Tbₙ bezeichnet.

Diese zweite Ausführungsform hat den Vorteil, daß in der Schaltungsanordnung einige Bildzeilenspeicher eingespart werden können. Sie hat jedoch den Nachteil, daß sie nur für die Verarbeitung von PALplus-Daten im Kamera-Mode geeignet ist.

Für die Erläuterung der Bezeichnungen gilt das oben bereits Ausgeführte; auch hier wird in einem sich wiederholenden Zyklus eine gleichartige Verarbeitung der Daten jeweils eines ungeradzahligen und eines geradzahligen Teilbildes aufeinanderfolgender Vollbilder vorgenommen.

Gemäß einer weiteren Ausgestaltung der Erfindung ist vorgesehen, daß im Kamera-Mode auf eine Verarbeitung der Bilddaten gemäß Anspruch 3, d.h. der zweiten Ausführungsform des Verfahrens, und im Film-Mode auf eine Verarbeitung der Daten gemäß Anspruch 2, d.h. der ersten Ausführungsform des Verfahrens, geschaltet wird. Damit werden die Vorteile der beiden Verfahren für die beiden Modi jeweils optimal genutzt.

Nachfolgend wird ein Ausführungsbeispiel der Erfindung anhand der Zeichnung näher erläutert. Es zeigen:
Fig. 1 eine schematische Darstellung eines undecodierten und eines decodierten PALplus-Bildsignals,
Fig. 2 ein Blockschaltbild einer Schaltungsanordnung zur Decodierung eines PALplus-Signals,
Fig. 3 eine schematische Darstellung einiger Teilbilder, wie sie in der Anordnung gemäß Fig. 2 gemäß einer ersten Ausführungsform zur Teilbildverarbeitung verarbeitet werden und
Fig. 4 eine schematische Darstellung entsprechend Fig. 3 für eine zweite Ausführungsform zur Verarbeitung der Teilbilder.

In Fig. list schematisch ein Bild 11 dargestellt, bei dem es sich um die Darstellung eines PALplus-Bildsignals handelt. Die Darstellung zeigt dieses Bild 11 in ursprünglicher, nicht decodierter Form, wie es beispielsweise auf einem konventionellen Fernsehempfänger mit einem Bildschirm des Seitenverhältnisses 4:3 erscheinen würde.

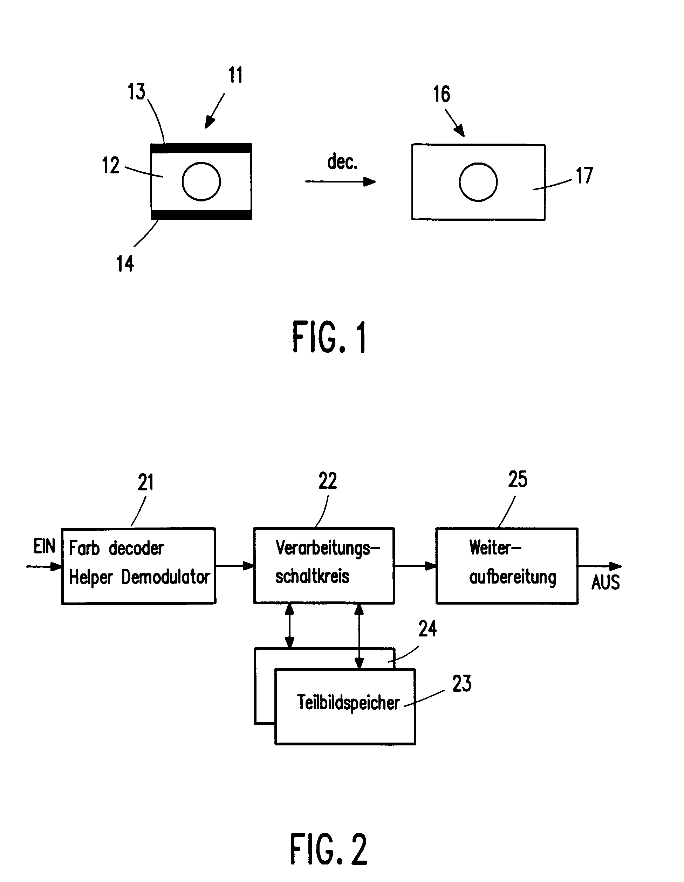

Das Bild 11 weist einen aktiven mittleren Bereich 12 auf, in dem der eigentliche Bildinhalt in dem nicht decodierten PALplus-Bildsignal erscheint. Dieser aktive Bereich 12 weist in sich etwa ein Bildseitenverhältnis von 16:9 auf. Um diesen Bildinhalt mit einem Seitenverhältnis von 16:9 auf einem Bildschirm mit dem Seitenverhältnis 4:3 in nicht verzerrter Form darstellen zu können, sind oben und unten schwarze Balken 13 und 14 vorgesehen. Diese Balken 13 und 14 erscheinen auf einem konventionellen Empfänger schwarz. Sie enthalten jedoch sogenannte Helper-Signale, die es gestatten, aus dem PALplus-Bildsignal ein solches Signal zu generieren, daß bei einem Bildseitenverhältnis von 16:9 die volle Bildzeilenzahl und damit die volle vertikale Auflösung aufweist. Die Darstellung eines solchen Bildsignals mit einem Seitenverhältnis von 16:9 ist in Fig. 1 schematisch anhand eines Bildes 16 dargestellt. Der gesamte Bereich 17 des Bildes 16 ist aktiver Darstellungsbereich.

Das decodierte PALplus-Bild 16 weist ebensoviele Bildzeilen auf, wie das Bild 11 mit seinem aktiven Bereich 12 und den schwarzen Balken 13 und 14. Damit weist das Bild 16 eine höhere Vertikalauflösung auf, als der aktive Teilbereich 12 des Bildes 11. Ferner ist das Bild 16 entsprechend dem PALplus-Standard bezüglich seiner Luminanz/Chrominanz-Trennung verbessert.

Um das Luminanzsignal zu erhalten, wird bei dem MACP-Processing für die Daten zweier Teilbilder eines Vollbildes jeweils eine Tiefpaß- und eine Hochpaßfilterung vorgenommen. Die hochpaßgefilterten Daten aus den beiden Teilbildern werden addiert. Daraus erhält man den hochfrequenten Luminanzanteil, der für beide Teilbilder gültig ist, sofern keine Bewegung im Bildinhalt vorhanden ist. Ist Bewegung vorhanden, wird dies durch einen Bewegungsdetektor erkannt. Liegt Bewegung vor, werden die hochfrequenten Luminanzanteile abgeregelt, d.h. abhängig vom Maße der Bewegung in der Amplitude gedämpft. Dies deshalb, weil im Falle einer vorliegenden Bewegung die Chromasignale als Cross-Luminanz im hochfrequenten Luminanzkanal sichtbar sein würden.

Die Luminanzsignale zweier Teilbilder ergeben sich durch Addition derer tiefpaßgefilteter Signale mit dem wie oben beschrieben ermittelten Hochpaßsignal. Die Farbsignale werden in der Weise bearbeitet, daß die demodulierten Signale zweier Teilbilder eines Vollbildes addiert werden und als Chromainformation für beide Teilbilder eingesetzt werden. Dies ist jedoch nur dann zulässig, wenn keine Bewegung vorliegt. Durch die Addition fällt die hochfrequente Luminanz aus dem Chromakanal heraus. Liegt Bewegung vor, werden die Chromainformationen in konventioneller Weise nur für das jeweils zugeordnete Teilbild ausgegeben. In diesem Falle wird die hochfrequente Luminanz senderseitig abgeregelt, damit im Chromakanal möglichst wenig Cross-Color-Störungen auftreten.

Die Bewegungsdetektion findet anhand der Chrominanzdaten statt. Für die Bewegungsdetektion wird aus den Chromadaten zweier Teilbilder eines Vollbildes ein gemittelter Wert gebildet. Die Differenz der gemittelten Werte zweier aufeinanderfolgender Vollbilder ist ein Maß für die vorliegende Bewegung. In Abhängigkeit dieser so gewonnenen Bewegungsinformation werden im Chroma- und im Luminanzkanal die oben beschriebenen Vorgänge gesteuert.

Fig. 2 zeigt ein Blockschaltbild einer Schaltungsanordnung eines PALplus-Decoders gemäß der Erfindung.

Die Darstellung gemäß Fig. 2 zeigt einen Farbdecoder und Helper-Signal-Demodulator 21, dem eingangsseitig ein FBAS-Signal zugeführt wird. Dieses Signal kann direkt von einer externen Schnittstelle zugeführt werden; es kann sich aber auch um das demodulierte Signal eines über einen Antenneneingang, einen nachfolgenden Tuner, sowie eine nachfolgende ZF-Stufe des Empfängers zugeführtes Signal handeln.

Der Farbdecoder und Helper-Signal-Demodulator 21 nimmt die Aufbereitung der Farbhilfsträgerschwingung vor. Das Chrominanzsignal und das hochfrequente Luminanzsignal, die in dem FBAS-Signal enthalten sind, werden von diesem mittels in der Zeichnung nicht näher dargestellten Filtern getrennt und in einem ebenfalls nicht dargestellten Quadraturdemodulator in Basisbandlage überführt. Dieses Signal wird gemäß Darstellung in Fig. 2 einem Schaltkreis 22 zur Signalverarbeitung zugeführt.

Ferner führt der Farbdecoder und Helper-Signal-Demodulator 21 der Schaltungsanordnung 22 zur Signalverarbeitung das vollständige, unveränderte FBAS-Signal zu, bei dem es sich um ein PALplus-Signal handelt. Hierbei wird nicht die sonst übliche Trennung von Chrominanzsignal und Luminanzsignal durchgeführt. Ferner nimmt der Farbdecoder und Helper-Signal-Demodulator 21 eine Demodulation der Helper-Signale durch und führt diese in den Basisbandbereich über. Diese demodulierten Helper-Signale werden ebenfalls dem Schaltkreis 22 zur Signalverarbeitung zugeführt.

In dem Schaltkreis 22 werden die ihm zugeführten Signale in digitaler Form verarbeitet. Die Analog/Digital-Wandlung der Basisbandsignale, die der Farbdecoder und Helper-Signal-Demodulator 21 liefert, kann in diesem, vor diesem oder auch nach diesem Decoder 21 vorgenommen werden.

Der Schaltkreis 22 zur Signalverarbeitung greift auf eine Speicheranordnung zu, welche zwei Teilbildspeicher 23 und 24 aufweist. Diese Teilbildspeicher gestatten beim Auslesen der abgespeicherten Daten einen wahlfreien Zugriff auf diese; d.h. es kann auf beliebige Daten unabhängig von deren Reihenfolge beim Einlesen der Daten in den Speicher zugegriffen werden.

Der Schaltkreis 22 liefert ein Ausgangssignal, welches in einem weiteren Schaltkreis 25 zur Darstellung auf einem in der Fig. 2 nicht dargestellten Bildschirm weiter aufbereitet wird.

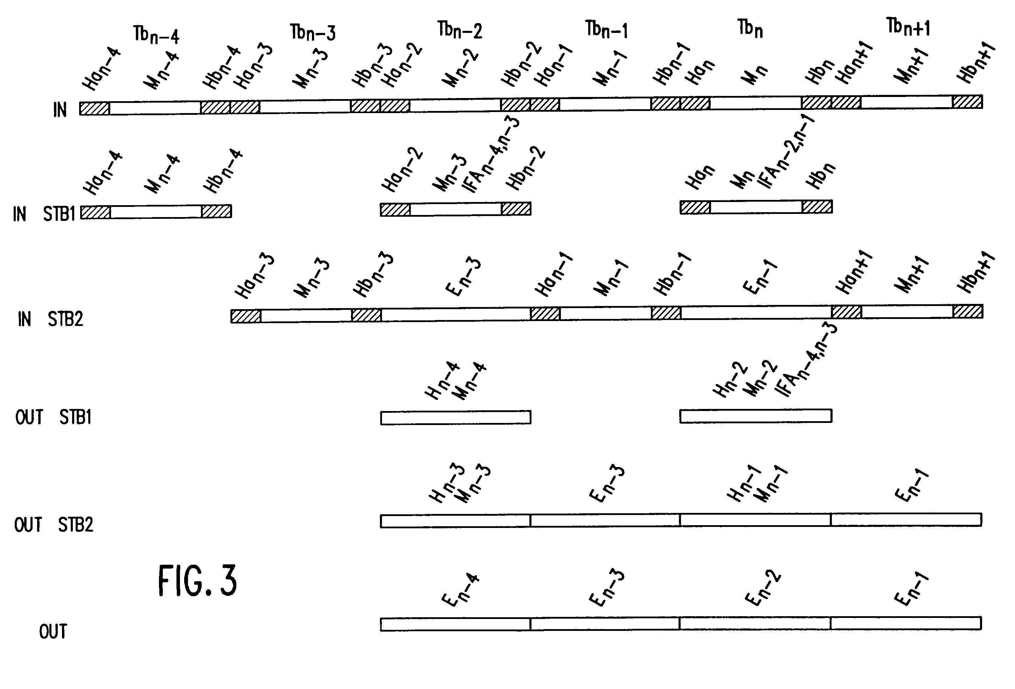

Im folgenden wird anhand der Figur 3 eine erste Ausführungsform eines Verfahrens erläutert, wie es vorteilhaft für die Verarbeitung von PALplus-Daten unter Einsatz der anhand der Figur 1 und 2 beschriebenen Schaltungsanordnung eingesetzt werden kann.

Diese erste Ausführungsform eines Verfahrens zur Verarbeitung von Daten eines PALplus-Bildsignals, die nachfolgend anhand der schematischen Darstellung in Fig. 3 näher erläutert wird, weist insbesondere den Vorteil auf, daß die oben beschriebene Einsparung von Bildspeicher möglich wird. Diese erste Ausführungsform ist ferner dadurch gekennzeichnet, daß sie zur Verarbeitung von PALplus-Bilddaten im Film-Mode oder im Kamera-Mode geeignet ist. Sie ist damit für alle Übertragungsmodi, die nach der PALplus-Spezifikation vorgesehen sind, geeignet.

Die Darstellung gemäß Fig. 3 zeigt in sechs Zeilen die Verarbeitung verschiedener Daten verschiedener Teilbilder von PALplus Bildsignalen. In der ersten Zeile sind die Daten eines PALplus-Bildsignals, so wie sie beispielsweise der in Fig. 1 dargestellten Schaltungsanordnung eingangsseitig zugeführt werden, dargestellt. In den Zeilen 2 und 3 ist mit IN STB1 bzw. IN STB2 gekennzeichnet, welche Daten in eine Speicheranordnung eingelesen werden können. Es muß sich dabei nicht um zwei getrennte Speicheranordnungen handeln; die Daten können auch in eine, entsprechend große Speicheranordnung eingelesen werden. Die nachfolgenden OUT STB1 und OUT STB2 kennzeichnen in umgekehrter Weise die aus den Speicheranordnungen bzw. der Speicheranordnung ausgelesenen Daten. Die letzte Zeile, die mit OUT gekennzeichnet ist, kennzeichnet diejenigen Daten, die beispielsweise die Anordnung gemäß Fig. 1 verlassen und somit das dekodierte PALplus-Bildsignal darstellen.

Die schematische Darstellung gemäß Fig. 3 zeigt ferner sechs Spalten, die mit Tbₙ₋₄ bis Tbₙ₊₁ gekennzeichnet sind. Diese Kennzeichnung Tbₙ₋₄ bis Tbₙ₊₁ orientiert sich an den jeweils empfangenen Daten von Teilbildern Tbₙ₋₄ bis Tbₙ₊₁. Die in der jeweils gleichen Spalte, beispielsweise der Spalte Tbₙ in den Zeilen 2 bis 6 dargestellten Daten bzw. Vorgänge finden also während derjenigen Zeitspanne statt, in der das Teilbild Tbₙ empfangen wird.

Die in den jeweiligen Zeilen und Spalten angegebenen Daten haben nachfolgend erläuterte Bedeutung. Die Daten Mₙ₋ₓ kennzeichnen die Daten des aktiven Bildbereiches eines Teilbildes Tbₙ₋ₓ. Es handelt sich dabei um diejenigen Daten, die auf einem normalen PAL-Empfänger, der die PALplus-Daten nicht dekodiert, als aktiver Bildbereich erscheinen. Das PALplus-Bildsignal enthält ferner sogenannte Helper-Signale, die mit Hₙ₋ₓ gekennzeichnet sind. Diese Helper-Signale enthalten zusätzliche Informationen, die zur vollständigen Rekonstruktion des vertikalen Bildinhalts eines PALplus-Bildes vorgesehen sind. Auf einem normalen PAL-Empfänger sind diese Helper-Signale sogut wie nicht erkennbar, da sie in den schwarzen oberen und unteren Balken des Bildes durch Absuchen der Amplitude und Modulation auf den Farbträger versteckt sind. Diese Helper-Signale sind in der Figur für oberen und unteren Bildbereich getrennt mit Haₙ₋ₓ und Hbₙ₋ₓ bezeichnet. Bei der späteren Verarbeitung der Bilddaten sind die Helper-Signale zum Teil nur noch mit Hₙ₋ₓ gekennzeichnet; es handelt sich dann sowohl um die Signale Haₙ₋ₓ wie auch Hbₙ₋ₓ. In der Darstellung gemäß Fig. 3 tauchen ferner Daten IFA_{n-y, n-x} auf. Es handelt sich dabei um die bildpunktweise aufaddierten Chroma-Daten zweier aufeinanderfolgender Teilbilder n-x, n-y. Diese werden zur Erkennung von Bewegung im Bildinhalt eingesetzt. In der Figur mit Eₙ₋ₓ gekennzeichnete Teilbilder sind die vollständig dekodierten PALplus-Teilbilder.

Die ersten vier Spalten der Darstellung gemäß Fig. 3 zeigen diejenigen Vorgänge, die, beispielsweise in der Schaltungsanordnung gemäß Fig. 1, während des Empfanges der ersten vier Teilbilder Tbₙ₋₄ - Tbₙ₋₁ ablaufen. Da bei dem Empfang dieser ersten vier Teilbilder die erforderlichen Daten früherer Teilbilder noch nicht vorliegen, handelt es sich hierbei um eine Art "Einschwingvorgang", der nachfolgend nicht näher erläutert werden soll. Erst ab dem Teilbild Tb_{b} sind die für die Verarbeitung erforderlichen Daten früherer Teilbilder vollständig vorhanden. Entsprechendes gilt für die nachfolgenden Teilbilder Tbₙ₊₁ usw. Nachfolgend wird daher anhand der Teilbilder Tbₙ, und Tbₙ₊₁, die beide gemeinsam ein Vollbild bilden, die Verarbeitung der Daten anhand der ersten Ausführungsform des Verfahrens näher erläutert. Bei Empfang des ungeradzahligen Teilbildes Tbₙ werden dessen Daten Mₙ und Hₙ, welche sich aus Haₙ und Hbₙ zusammensetzen, in der Speicheranordnung abgespeichert. Dies ist in der Figur 3 mit IN STB1 gekennzeichnet. Ferner werden in diesem Speicherbereich die Daten IFA_{n-2, n-1} abgespeichert. Dabei handelt es sich um die zeilenweise und bildpunktweise aufaddierten Chromadaten der Teilbilder Tbₙ₋₁ und Tbₙ₋₂. Deren Daten werden dazu aus der Speicheranordnung ausgelesen. Diese Daten IFA_{n-2,n-1} können beim späteren vorzunehmenden Vergleich mit den Daten IFA_{n-4,n-3} dazu eingesetzt werden, um zwischen diesen beiden Vollbildern vorliegende Bewegung im Bildinhalt zu detektieren. Dies ist nur im Kamera-Mode notwendig, da im Film-Mode zwischen zwei Teilbildern eines Vollbildes keine Bewegung auftreten kann.

Bei Empfang des ungeradzahligen Teilbildes Tbₙ werden ferner entsprechend der Spalte Tbₙ in der Darstellung gemäß Fig. 3 die Daten Mₙ₋₁, Hₙ₋₁ sowie Mₙ₋₂ und Hₙ₋₂ der Teilbilder Tbₙ₋₁ und Tbₙ₋₂ aus der Speicheranordnung ausgelesen. Ferner werden die Daten IFA_{n-4, n-3} aus der Speicheranordnung ausgelesen, die zuvor aus den Chromadaten der Teilbilder Tbₙ₋₃ und Tbₙ₋₄ berechnet worden waren. Aus all diesen ausgelesenen Daten wird das PALplus-Teilbild Eₙ₋₂ berechnet und ausgegeben. Ferner wird aus diese Daten das PALplus-Teilbild Eₙ₋₁ berechnet. Dieses wird in der Speicheranordnung abgespeichert, was in der Figur mit IN STB2 gekennzeichnet ist. All diese beschriebenen Vorgänge laufen während des Empfangs des Teilbildes Tbₙ ab. Wie aus der Erläuterung ersichtlich, werden insbesondere auch die Daten früherer Teilbilder verarbeitet.

Die nachfolgend in der Fig. 3 dargestellte Spalte Tbₙ₊₁ stellt diejenigen Vorgänge dar, die während des Empfangs des Teilbildes Tbₙ₊₁, bei dem es sich um ein geradzahliges Teilbild handelt, ablaufen. Die beiden Teilbilder Tbₙ und Tbₙ₊₁ bilden zusammen ein Vollbild.

Bei Empfang des Teilbildes Tbₙ₊₁ werden dessen Daten in der Speicheranordnung abgespeichert, was in der Fig. 3 in der Zeile IN STB2 dargestellt ist. Es handelt sich dabei um die Daten Mₙ₊₁ und Haₙ₊₁ des Teilbildes Tbₙ₊₁.

Ferner werden die Daten des zuvor, nämlich während des Empfangs des Teilbildes Tbₙ, berechneten Daten des vollständig PALplus dekodierten Teilbildes Eₙ₋₁ aus der Speicheranordnung ausgelesen (OUT STB2) und als PALplus-Teilbild ausgegeben.

Die oben beschriebenen Vorgänge, die während des Empfangs der Teilbilder Tbₙ und Tbₙ₊₁ ablaufen, wiederholen sich zyklisch. Für beispielsweise nachfolgend empfangene Teilbilder Tbₙ₊₂ und Tbₙ₊₃ würden die entsprechenden Vorgänge ablaufen, jedoch jeweils für Teilbilder, deren Index um zwei Punkte höher ist. Diese Vorgänge wiederholen sich jeweils für zwei Teilbilder eines Vollbildes.

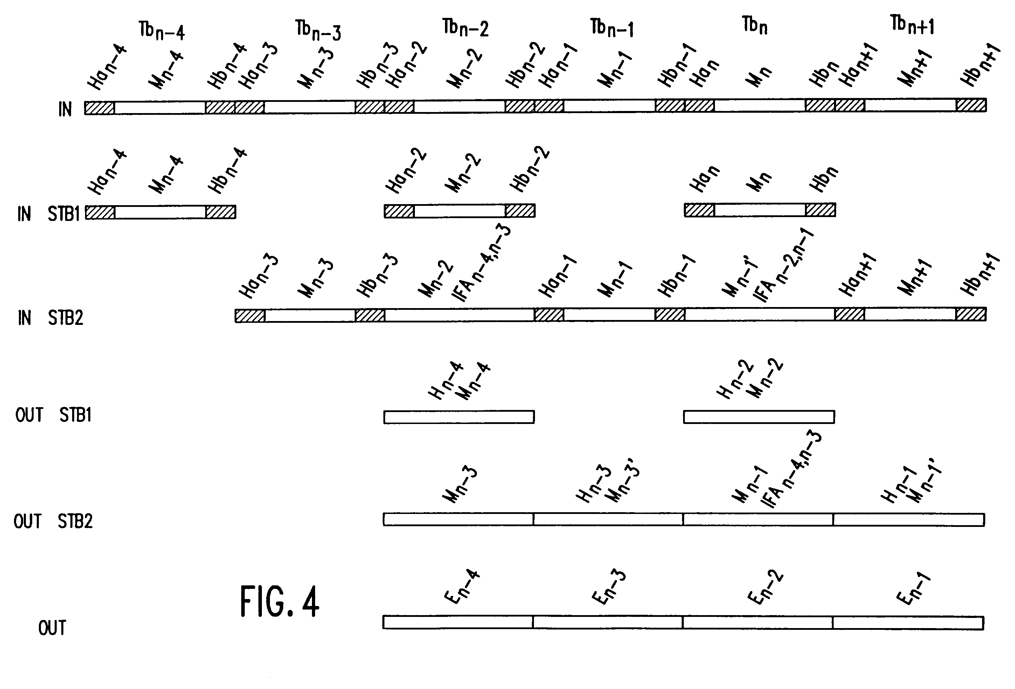

Die Darstellung gemäß Fig. 4 zeigt eine gleichartige schematische Darstellung wie Fig. 3. Jedoch zeigt die Darstellung gemäß Fig. 4 die Vorgänge für eine zweite Ausführungsform des Verfahrens zur Verarbeitung von Daten von PALplus-Bildsignalen, wie sie vorteilhaft mittels der in Fig. 2 dargestellten Schaltungsanordnung verarbeitet werden können.

In Fig. 4 sind für dieses zweite Verfahren die Daten in gleicher Weise gekennzeichnet wie in Fig. 3. In der Darstellung gemäß Fig. 4 treten zusätzlich Daten Mₙ' auf, die die Daten Mₙ kennzeichnen, die bereits bezüglich der Trennung von Luminanz und Chrominanz vorbearbeitet sind, die also quasi teilweise bereits nach den PALplus-Spezifikationen bearbeitet sind.

Bei Empfang des ungeradzahligen Teilbildes Tbₙ werden dessen Daten Mₙ und Hₙ in der Speicheranordnung abgespeichert (IN STB1).

Aus der Speicheranordnung werden die Daten Mₙ₋₂, Mₙ₋₁ und die zuvor berechneten und abgespeicherten IFA_{n-4, n-3} ausgelesen. Aus den Daten Mₙ₋₂ und Mₙ₋₁ werden die neuen Daten IFA_{n-2, n-1} sowie die Daten Mₙ₋₁' berechnet und in der Speicheranordnung abgespeichert (IN STB2).

Ferner werden aus den aus der Speicheranordnung ausgelesenen Daten Mₙ₋₁, Mₙ₋₂, Hₙ₋₂ und IFA_{n-4, n-3} und aus den wie oben beschrieben ermittelten Daten IFA_{n-2, n-1} die Daten des PALplus-Teilbildes Eₙ₋₂ berechnet und ausgegeben.

Die nächste Spalte zeigt diejenigen Vorgänge, die bei Empfang des geradzahligen Teilbildes Tbₙ₊₁ ablaufen. Die Daten Mₙ₊₁ und Hₙ₊₁ dieses Teilbildes Tbₙ₊₁ werden in der Speicheranordnung abgespeichert. Ferner werden die Daten Hₙ₋₁ und Mₙ₋₁' des Teilbildes Tbₙ₋₁ aus der Speicheranordnung ausgelesen und aus diesen das PALplus-Teilbild Eₙ₋₁ berechnet und ausgegeben.

Für diese zweite Ausführungsform des Verfahrens gilt ebenso, daß diese Vorgänge, die exemplarisch anhand der während des Empfangs der Teilbilder Tbₙ und Tbₙ₊₁ ablaufenden Vorgänge erläutert wurden, für die nachfolgenden Teilbilder in entsprechender Weise zyklisch wiederholt ablaufen.

Da die Verarbeitung der Daten gemäß der ersten Ausführungsform des Verfahrens für Film-Modus und Kamera-Modus geeignet ist, die Vorgehensweise gemäß der zweiten Ausführungsform des Verfahrens jedoch nur für die Verarbeitung von PALplus-Daten im Kamera-Modus geeignet ist, kann vorteilhaft eine Umschaltung zwischen diesen beiden Verfahren in der Weise vorgenommen werden, daß das erste Verfahren für Empfang von PALplus-Bildsignalen im Film-Modus und das zweite Verfahren für den Empfang von PALplus-Daten im Kamera-Modus eingesetzt wird.

## Patentansprüche

1. Schaltungsanordnung zur Dekodierung eines PALplus-Bildsignals, in welcher Schaltungsanordnung:
ein Schaltkreis (22) zur Signalverarbeitung vorgesehen ist, der mit einer Speicheranordnung (23,24) gekoppelt ist, welche die Daten zweier Teilbilder des Bildsignals oder des decodierten Bildsignals und zur Berechnung von Bewegungsinformationen bestimmte, bildpunktweise addierte Chromainformationen zweier Teilbilder eines Vollbildes aufnehmen kann,
die Speicheranordnung (23,24) wahlfreien Zugriff auf alle Daten wenigstens eines abgespeicherten Teilbildes gestattet,
der Schaltkreis (22) zur Signalverarbeitung auch zur vollständigen PALplus-Decodierung, insbesondere zur bewegungsadaptiven Luminanz-Chrominanz-Trennung und zur Rekonstruktion des vollen vertikalen Bildinhalts, ausschließlich auf die in der Speicheranordnung (23,24) abgespeicherten Daten zugreift und
daß der Schaltkreis (22) zur Signalverarbeitung mittels Steuersignalen in der Weise umschaltbar ist, daß er in Abhängigkeit der Steuersignale eine PALplus-Dekodierung in einem Film-Mode oder einem Kamera-Mode, in dem Daten von Studiokameras übertragen werden, vornimmt.

2. Verfahren zur Dekodierung und Verarbeitung von Daten eines PALplus-Bildsignals mittels der Anordnung nach Anspruch 1, wobei das Verfahren alle Schritte umfaßt, die von den einzelnen Elementen der Anordnung nach Anspruch 1 aus geführt werden, in welchen Verfahren im Kamera-Mode oder im Film-Mode folgende Verarbeitung der Daten stattfindet:
- daß bei Empfang eines ungeradzahligen Teilbildes Tbₙ
- die Daten Mₙ und die Daten Hₙ sowie im Kamera-Mode die aus den Teilbildern Tbₙ₋₁ und Tbₙ₋₂, deren Daten aus der Speicheranordnung ausgelesen werden, berechneten Daten IFA_{n-2,n-1} in der Speicheranordnung abgespeichert werden und
- die Daten Mₙ₋₁, Hₙ₋₁ und Mₙ₋₂, Hₙ₋₂ der Teilbilder Tbₙ₋₁ und Tbₙ₋₂ und im Kamera-Mode die aus den Chroma-Daten der Teilbilder Tbₙ₋₃ und Tbₙ₋₄ berechneten Daten IFA_{n-4,n-3} aus der Speicheranordnung ausgelesen und daraus das PALplus Teilbild Eₙ₋₂ berechnet und ausgegeben wird und das PALplus Teilbild Eₙ₋₁ berechnet und in der Speicheranordnung abgespeichert wird,
- und daß bei Empfang eines geradzahligen Teilbildes Tbₙ₊₁
- die Daten Mₙ₊₁ und Hₙ₊₁ in der Speicheranordnung abgespeichert werden und
- die Daten Eₙ₋₁ aus der Speicheranordnung ausgelesen und als PALplus Teilbild Eₙ₋₁ ausgegeben werden,
wobei Mₙ die Daten des aktiven Bildbereichs, Hₙ die Helper-Informationen, IFAₙ die bildpunktweise aufaddierten Chromadaten zweier Teilbilder eines Vollbildes bezeichnen und wobei Eₙ das PALplus-decodierte Teilbild Tbₙ bezeichnet.

3. Verfahren zur Dekodierung und Verarbeitung von Daten eines PALplus-Bildsignals mittels der Schaltungsanordnung nach Anspruch 1, wobei das Verfahren alle Schritte umfaßt, die von den einzelnen Elementen der Anordnung nach Anspruch 1 ausgeführt werden, in welchem Verfahren im Kamera-Mode folgende Verarbeitung der Daten stattfindet:
- daß bei Empfang eines ungeradzahligen Teilbildes Tbₙ
- die Daten Mₙ und Hₙ des Teilbildes Tbₙ in der Speicheranordnung abgespeichert werden,
- aus den aus der Speicheranordnung ausgelesenen Daten Mₙ₋₂, Mₙ₋₁ und IFA_{n-4,n-3} und aus den aus den Daten Mₙ₋₂ und Mₙ₋₁ ermittelten Daten IFA_{n-2,n-1} die Daten Mₙ₋₁' berechnet und abgespeichert werden und die Daten IFA_{n-2,n-1} abgespeichert werden,
- aus den aus der Speicheranordnung ausgelesenen Daten Mₙ₋₁, Mₙ₋₂, Hₙ₋₂ und IFA_{n-4,n-3} und aus den Daten IFA_{n-2,n-1} das PALplus Teilbild Eₙ₋₂ berechnet und ausgegeben wird,
- und daß bei Empfang eines geradzahligen Teilbildes Tbₙ₊₁
- die Daten Mₙ₊₁ und Hₙ₊₁ in der Speicheranordnung abgespeichert werden,
- die Daten Hₙ₋₁ und Mₙ₋₁' aus der Speicheranordnung ausgelesen aus diesen das PALplus Teilbild Eₙ₋₁ berechnet und ausgegeben wird,
wobei Mₙ die Daten des aktiven Bildbereichs, Hₙ die Helper-Informationen, IFAₙ die bildpunktweise aufaddierten Daten zweier Teilbilder eines Vollbildes und Mₙ' die bezüglich der Trennung von Luminanz und Chrominanz bearbeiteten Daten eines Teilbildes Tbₙ bezeichnen und wobei Eₙ das PALplus-decodierte Teilbild Tbₙ bezeichnet.

4. Verfahren nach den Ansprüchen 2 und 3, in welchem Verfahren im Kamera-Mode auf eine Verarbeitung der Bilddaten gemäß Anspruch 3 und im Film-Mode auf eine Verarbeitung der Daten gemäß Anspruch 2 geschaltet wird.

## Claims

1. A circuit arrangement for decoding a PALplus video signal, in which circuit arrangement:
a circuit arrangement (22) for signal processing is provided which is coupled to a memory device (23, 24) which is capable of storing the data of two partial pictures of the picture signal or of the decoded picture signal as well as chrominance data of two partial pictures of a full picture added pixel by pixel and designed for calculating motion information, the memory device (23, 24) renders possible random access to all data of at least one stored partial picture,
the circuit arrangement (22) for signal processing accesses exclusively the data stored in the memory device (23, 24) also for the full PALplus decoding, in particular for the motion adaptive luminance/chrominance separation and for the reconstruction of the full vertical picture content, and
the circuit arrangement (22) for signal processing is switchable by means of control signals such that it carries out a PALplus decoding in a film mode or in a camera mode, in which data of studio cameras are transmitted, in dependence on the control signals.

2. A method of decoding and processing data of a PALplus video signal by means of the circuit arrangement as claimed in claim 1, where the method comprises all steps carried out by the individual elements of the circuit arrangement of claim 1, in which method the processing of received partial pictures is carried out such that the following data processing takes place in the camera mode or in the film mode:
- upon reception of an odd-numbered partial picture Tbₙ
- the data Mₙ and the data Hₙ as well as, in the camera mode, the data IFA_{n-2,n-1} calculated from the partial pictures Tbₙ₋₁ and Tbₙ₋₂, whose data are read out from the memory device, are stored in the memory device, and
- the data Mₙ₋₁, Hₙ₋₁ and Mₙ₋₂, Hₙ₋₂ of the partial pictures Tbₙ₋₁ and Tbₙ₋₂ and, in the camera mode, the data IFA_{n-4,n-3} calculated from the chrominance data of the partial pictures Tbₙ₋₃ and Tbₙ₋₄ are read out from the memory device, and the PALplus partial picture Eₙ₋₂ is calculated therefrom and supplied as output, and the PALplus partial picture Eₙ₋₁ is calculated and stored in the memory device,
- and upon reception of an even-numbered partial picture Tbₙ₊₁
- the data Mₙ₊₁ and Hₙ₊₁ are stored in the memory device, and
- the data Eₙ₋₁ are read out from the memory device and are supplied as an output representing the PALplus partial picture Eₙ₋₁,
wherein Mₙ represents the data of the active picture region, Hₙ the helper information, IFAₙ the chrominance data of two partial pictures of a full picture added together pixel by pixel, and Eₙ the PALplus decoded partial picture Tbₙ.

3. A method of decoding and processing data of a PALplus video signal by means of the circuit arrangement as claimed in claim 1, where the method comprises all steps which are carried out by the individual elements of the circuit arrangement of claim 1, in which method it is provided that in the camera mode the following data processing takes place:
- upon reception of an odd-numbered partial picture Tbₙ
- the data Mₙ and Hₙ of the partial picture Tbₙ are stored in the memory device,
- the data Mₙ₋₁' are calculated from the data Mₙ₋₂, Mₙ₋₁ and IFA_{n-4,n-3} read from the memory device and from the data IFA_{n-2,n-1} determined from the data Mₙ₋₂ and Mₙ₋₁ and are stored, and the data IFAₙ₋₂₋ₙ₋₁ are stored,
- the PALplus partial picture Eₙ₋₂ is calculated from the data Mₙ₋₁, Mₙ₋₂, Hₙ₋₂ and IFA_{n-4,n-3} read from the memory device and from the data IFA_{n-2,n-1} and is provided as output,
- and upon reception of an even-numbered partial picture Tbₙ₊₁
- the data Mₙ₊₁ and Hₙ₊₁ are stored in the memory device,
- the data Hₙ₋₁ and Mₙ₋₁' are read from the memory device, and the PALplus partial picture Eₙ₋₁ is calculated therefrom and given as output,
where Mₙ denotes the data of the active picture region, Hₙ the helper information, IFAₙ the data of two partial pictures of a full picture added together pixel by pixel, and Mₙ' the data of a partial picture Tbₙ processed as regards the separation between luminance and chrominance, while Eₙ is the PALplus decoded partial picture Tbₙ.

4. A method as claimed in claims 2 and 3, in which method in the camera mode a switch is made to processing of the video data in accordance with claim 3, and in the film mode a switch is made to processing of the data in accordance with claim 2.

## Revendications

1. Circuit de décodage d'un signal d'image PALplus dans lequel :
- il est prévu un circuit de commutation (22) en vue du traitement des signaux qui est couplé à un dispositif de mémoire (23, 24) qui peut enregistrer les données de deux images partielles du signal d'image ou du signal d'image décodé et les informations de chrominance additionnées pixel par pixel des deux images partielles d'une image complète déterminées en vue du calcul des informations de mouvement,
- le dispositif de mémoire (23, 24) permet un accès aléatoire à toutes les données d'au moins une image partielle enregistrée,
- le circuit de commutation (22) en vue du traitement des signaux a exclusivement accès aux données enregistrées dans le dispositif de mémoire (23, 24) en vue du décodage PALplus complet, en particulier en vue de la séparation luminance/chrominance d'adaptation au mouvement et en vue de la reconstruction du contenu vertical complet de l'image et
- le circuit de commutation (22) en vue du traitement des signaux peut commuter à l'aide des signaux de commande de telle manière qu'il effectue en fonction des signaux de commande un décodage PALplus en mode film ou en mode caméra dans lequel les données de caméras de studio sont transmises.

2. Procédé en vue du décodage et du traitement de données d'un signal d'image PALplus à l'aide d'un dispositif selon la revendication 1, le procédé comprenant toutes les étapes qui sont exécutées par les différents éléments du dispositif selon la revendication 1 dans lequel procédé le traitement des données s'effectue en mode caméra ou en mode film comme suit :
- en cas de réception d'une image partielle impaire Tbₙ:
- les données Mₙ et les données Hₙ ainsi qu'en mode caméra les données IFA_{n-2,n-1} calculées à partir des images partielles Tbₙ₋₁ et Tbₙ₋₂ dont les données sont lues à partir du dispositif de mémoire sont enregistrées dans le dispositif de mémoire et
- les données Mₙ₋₁, Hₙ₋₁ et Mₙ₋₂, Hₙ₋₂ des images partielles Tbₙ₋₁ et Tbₙ₋₂ et, en mode caméra, les données IFA_{n-4,n-3} calculées à partir des données de chrominance des images partielles Tbₙ₋₃,Tbₙ₋₄ sont lues du dispositif de mémoire et, à partir de là, l'image partielle Eₙ₋₂ PALplus est calculée et délivrée et l'image partielle Eₙ₋₁ PALplus est calculée et enregistrée dans le dispositif de mémoire
- et en cas de réception d 'une image partielle Tbₙ₊₁ :
- les données Mₙ₊₁ et Hₙ₊₁ sont enregistrées dans le dispositif de mémoire et
- les données Eₙ₋₁ sont lues du dispositif de mémoire et délivrées sous la forme de l'image partielle Eₙ₋₁ PALplus,
Mₙ désignant les données de la zone d'image active, Hₙ les informations auxiliaires, IFAₙ le données de chrominance additionnées pixel par pixel de deux images partielles d'une image complète et Eₙ l'image partielle Tbₙ décodée PALplus.

3. Procédé de décodage et de traitement de données d'un signal d'image PALplus à l'aide du circuit selon la revendication 1, le procédé comprenant toutes les étapes qui sont exécutées par les différents éléments du dispositif selon la revendication 1, dans lequel le procédé le traitement suivant des données est effectué en mode caméra :
- en cas de réception d'une image partielle impaire Tbₙ:
- les données Mₙ et Hₙ de l'image partielle Tbₙ sont enregistrées dans le dispositif de mémoire,
- à partir des données Mₙ₋₂, Mₙ₋₁ et IFA_{n-4,n-3} lues de la mémoire et à partir des données IFA_{n-2,n-1} calculées à partir des données Mₙ₋₂ et Mₙ₋₁, les données Mₙ₋₁' sont calculées et enregistrées et les données IFA_{n-2,n-1} sont enregistrées ;
- l'image partielle En-2 PALplus est calculée et délivrée à partir des données Mₙ₋₁, Mₙ₋₂, Hₙ₋₂ et WA_{n-4,n-3} et à partir des données IFA_{n-2,n-1} lues de la mémoire et en cas de réception d 'une image partielle paire Tbₙ₊₁ :
- les données Mₙ₊₁ et Hₙ₊₁ sont enregistrées dans le dispositif de mémoire et
- les données Hₙ₋₁ et Mₙ₋₁ sont lues du dispositif de mémoire et, à partir de là,
l'image partielle Eₙ₋₁ PALplus est calculée et délivrée,
Mₙ désignant les données de la zone d'image active, Hₙ les informations auxiliaires, IFAₙ le données de chrominance additionnées pixel par pixel de deux images partielles d'une image complète et Mₙ' les données d'une image partielle Tbₙ traitées sur le plan de la séparation de la chrominance et de la luminance et Eₙ l'image partielle Tbₙ décodée PALplus.

4. Procédé selon l'une des revendications 2 et 3, dans lequel une commutation est effectuée en mode caméra à un traitement des données d'images conformément à la revendication 3 et en mode film à un traitement des données conformément à la revendication 2.
